# EUROPEAN PATENT APPLICATION

(11) **EP 1 296 491 A2**
(43) Date of publication of application: **26.03.2003**
(21) Application number: 02021218.9
(22) Date of filing: 18.09.2002
(51) Int. Cl.: H04L 12/64

(54) **Voice processing system and method for asynchronous transfer mode network**

(30) Priority: 20.09.2001 JP 2001286407
(71) Applicant: NEC CORPORATION, Tokyo (JP)
(72) Inventor: Unno, Yoshihiro, Minato-ku, Tokyo (JP); Takizawa, Seiji, Kohoku-ku, Yokohama-shi, Kanagawa (JP)
(74) Representative: VOSSIUS & PARTNER

(57) **Abstract**

Upon voice processing in an ATM network, processing delay in a real-time voice telecommunication processing is avoided. Voice data to be processed by a CPS processing unit and by an IuUP processing unit is subjected to protocol conversion based on an IuUP protocol and a CPS protocol. The IuUP protocol is defined as an upper protocol of the CPS protocol according-to the standard (3GPP 3G TS 25.415). Upon receiving and processing the voice data, the CPS processing unit does not execute CRC check; meanwhile, the IuUP processing unit executes the CRC check instead. Since a CPS header only uses UUI=26, the CPS header and an IuUP header are always added in combination. Although the CRC check for the CPS header is not executed, it is possible to confirm normality of an ATM cell just by checking IuUP header CRC. Accordingly, it is possible to avoid delay in signal processing by omitting check for the CPS header CRC.

## Description

The present invention relates to voice processing systems for an asynchronous transfer mode (ATM) network and to voice processing methods of the same. More specifically, the present invention relates to a voice processing system for processing voices in accordance with a mobile telecommunication standard called the international mobile telecommunications-2000 (IMT-2000), and to a voice processing method of the same.

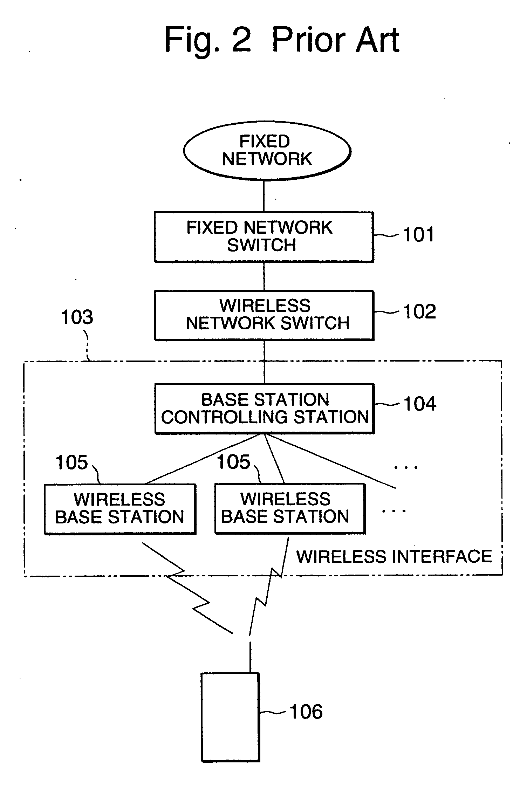

Fig. 2 shows a publicly-known telecommunication system according to the IMT-2000. In the telecommunication system in Fig. 2, call connection is performed by use of a fixed network switch 101 and a wireless network switch 102. The fixed network switch 101 is connected to another telecommunication network such as the IMT-2000 network, the Integrated Services Digital Network (ISDN), a PHS Internet Access Forum Standard (PIAFS) network, or the Personal Digital Cellular (PDC) network. Meanwhile, the wireless network switch 102 is connected to a mobile instrument 106 via a wireless interface 103. Moreover, the wireless network switch 102 includes a signal processing portion, and the wireless network switch 102 executes protocol conversion between fixed network user data and wireless network user data with the signal processing portion in the event of communication with the wireless interface 103. The wireless interface 103 is composed of a base station controlling station 104 and wireless base stations 105 severally connected to the base station controlling station 104. The wireless interface 103 controls communication between the mobile instrument 106 and the wireless network switch 102.

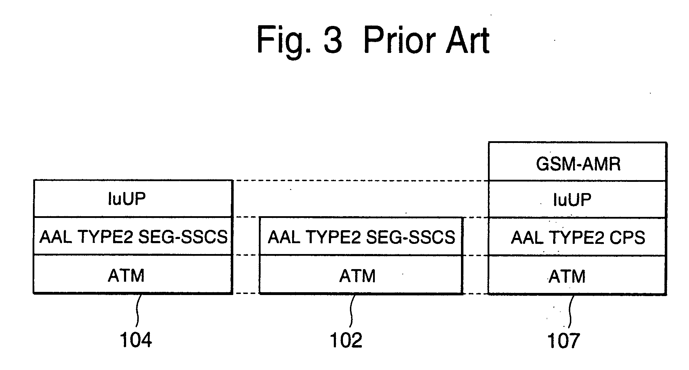

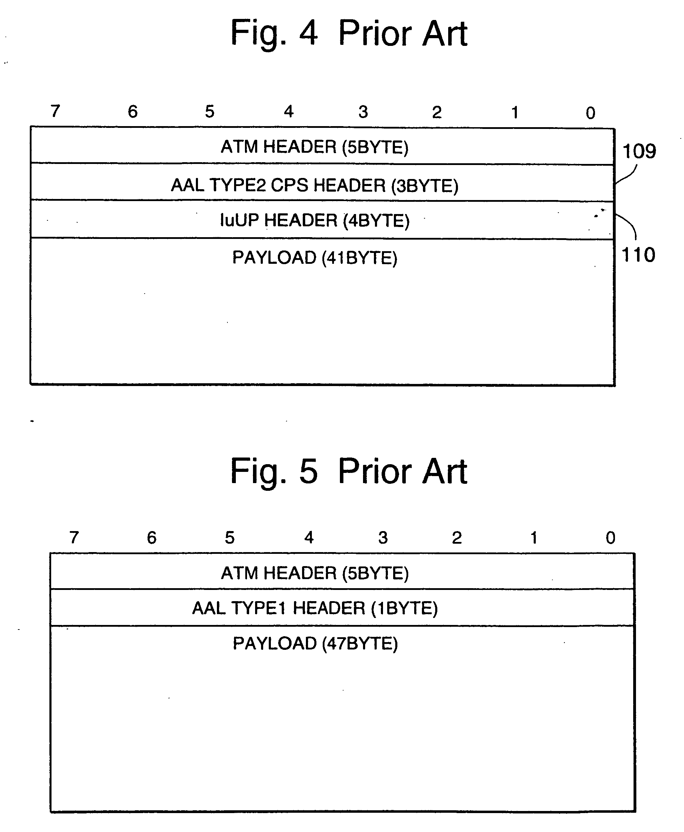

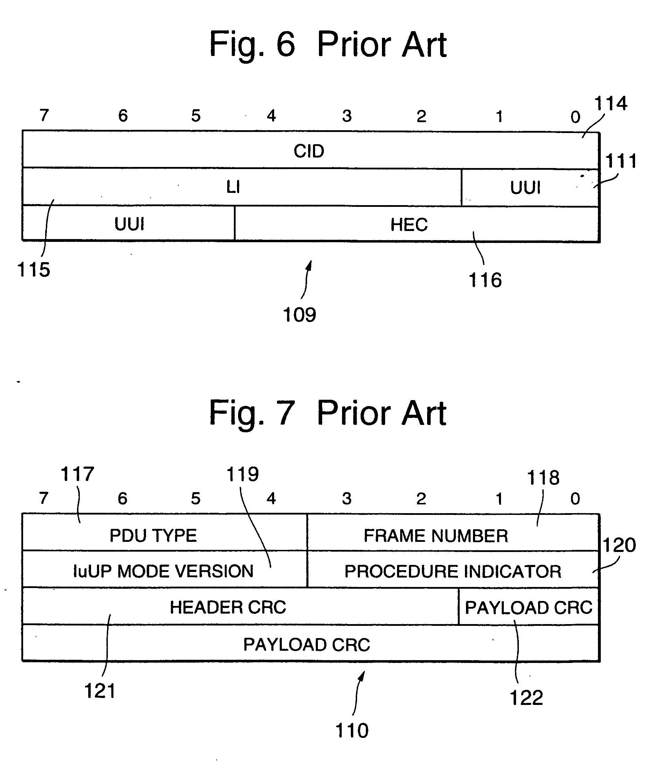

As shown in a protocol stack of the publicly-known telecommunication system of Fig. 3, an SEG-SSCS (which stands for a service specific convergence sublayer) of the ATM adaptation layer type 2 (AAL type 2) is used for a transmission path between the wireless network switch 102 and the base station controlling station 104. Moreover, a common part sublayer (hereinafter simply referred as the CPS) of the AAL type 2 as shown in reference numeral 107 is used in the signal processing portion of the wireless network switch 102. Note that the AAL type 2 is standardized in the International Telecommunication Union, Telecommunication Standardization Sector (ITU-T) recommendation I.363.2. Fig. 4 shows a format of an ATM cell in the signal processing portion of the wireless network switch 102, and Fig. 5 shows a format of an ATM cell on the fixed network side. As shown in Fig. 4, the ATM cell in the signal processing portion of the wireless network switch 102 includes a CPS header 109 and an IuUP header 110. Fig. 6 shows a format of the CPS header 109. In Fig. 6, a user-to-user indication (hereinafter referred to as UUI) 111 indicates as to whether user data overlaps multiple ATM cells or not. When the UUI= 0 to 26, then the UUI indicates that the relevant cell is the last cell. Meanwhile, Fig. 7 shows a format of the IuUP header 110. In voice processing, an IuUP protocol is used as an upper protocol of the CPS. Whereas UUI=26 is only used in a CPS header of an IuUP user frame.

An object of the present invention is to provide a voice processing system for an ATM network capable of avoiding processing delay in a real-time voice telecommunication processing, and to provide a voice processing method of the same.

In the following, modes to attain the above-mentioned object will be described. In the following description, parenthesized numbers, codes and the like are affixed to technical items therein. Those numbers, codes and the like coincide with technical items which constitute at least one of embodiments of the present invention; more particularly, with reference numerals and reference codes and the like affixed to the technical items expressed in the drawings corresponding to the embodiments. Those reference numerals and reference codes clarify correspondence and interfaces between the technical items as disclosed in the appended claims and the technical items described in the embodiments. However, such correspondence and interfaces do not necessarily mean that the technical items as disclosed in the claims shall be limited to the technical items expressly described in the embodiments.

A voice processing system for an ATM network according to the present invention includes a CPS processing unit (1) and an IuUP processing unit (2). Voice data are processed by the CPS processing unit (1) and by the IuUP processing unit (2), whereby the voice data are subjected to protocol conversion based on an IuUP protocol and a CPS protocol. Note that the IuUP protocol is defined as an upper protocol of the CPS protocol according to the standard (3GPP 3G TS 25.415). In the event of receiving and processing the voice data, the CPS processing unit (1) does not execute cyclic redundancy check (CRC), while the IuUP processing unit (2) executes the CRC check.

Since only UUI=26 is used in the CPS header upon voice user data processing, an IuUP header is always included in a wireless ATM cell together with the CPS header. Although the CRC (116) check for the CPS header is not executed, normality of the ATM cell is confirmed as long as the CRC check for the IuUP header is executed. In signal processing of the CPS header, parameter check is executed but the CRC check is not executed. Delay in signal processing can be relieved by omitting the CRC check for the CPS header.

A voice processing method for an ATM network according to the present invention includes the steps of executing check for a parameter of a CPS header (109), executing check for CRC (121) of an IuUP header (110), executing check for a parameter (118) of the IuUP header (110), and executing check for IuUP payload CRC (122). Throughout the above-described four steps, check for CRC (116) of the CPS header (109) is not executed.

Note that the parameters of the CPS header (109) include a channel identifier (114), a length indicator (115) and the like. It is defined according to the standard (3GPP 3GTS 25.415) that the CRC of the IuUP header (110) is composed of the IuUP header CRC (121) and the IuUP payload CRC (122).

The voice processing system for an ATM network and the voice processing method of the same according to the present invention can achieve speeding up of voice processing without damaging confirmation of normality of a voice signal according to the standard, and a degree of voice delay generated at the signal processing portion can be thereby reduced.

Fig. 1 is an operation flowchart showing an embodiment of the present invention.

Fig. 2 is a block diagram showing a publicly-known telecommunication system.

Fig. 3 is a view showing a protocol stack defined in the IMT-2000 system.

Fig. 4 is a view showing a format of an ATM cell in a signal processing portion of a wireless network switch.

Fig. 5 is a view showing a format of the ATM cell in a fixed network side.

Fig. 6 is a view showing a format of a CPS header, which is defined according to the ITU-T recommendation I.363.2.

Fig. 7 is a view showing a format of an IuUP header, which is defined according to the 3GPP 3G TS25.415.

Now, embodiments of the present invention will be described in detail with reference to the accompanying drawings.

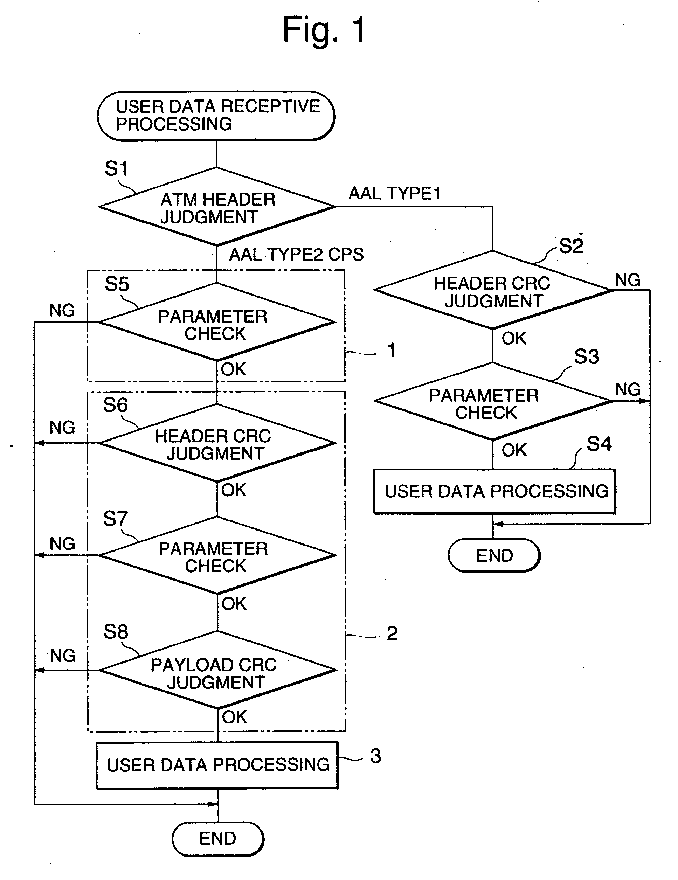

Voice processing for an ATM network according to the present invention refers to voice processing in the signal processing portion of wireless network switch 102 of the publicly-known telecommunication system shown in Fig. 2. As shown in Fig. 1, processing 1 of the CPS processing unit is provided together with processing 2 of the IuUP processing unit. The processing 1 of the CPS processing unit and the processing 2 of the IuUP processing unit are mutually connected as telecommunication processing. Moreover, the processing 2 of the IuUP processing unit is connected to processing 3 of a user data processing unit as telecommunication processing.

Fig. 1 shows connective relations among the respective units and an operation flow for executing the voice processing method for an ATM network according to the present invention. In Fig. 2, a processing portion of the IuUP processing unit of the wireless network switch 102 receives mobile-side user data from the mobile instrument 106 via the wireless interface 103, and-also receives fixed-side user data via the fixed network switch 101.

In the user data receiving processing of the present invention, in Step S1, judgment of an ATM header is carried out on the received user data prior to a series of processing. In the judgment of the ATM header, judgment is made as to whether the received user data are of the ATM adaptation layer type 1 (AAL type 1) as shown in Fig. 5 or of the AAL type 2 CPS as shown in Fig. 4, and the following processing is executed depending on the type.

### 1) In the case of the AAL type 1:

Header CRC judgment of a fixed-side ATM is executed in Step S2. Subsequently, parameter check of the fixed-side ATM is executed in Step S3. Furthermore, user data processing (processing such as voice decoding) is executed by the user data processing unit in Step S4.

### 2) In the case of the AAL type 2 CPS:

Parameter check of a CPS header 109 shown in Fig. 6 is executed in Step S5. As shown in Fig. 6, a format of the CPS header 109 includes a channel identifier (CID) 114, a length indicator (LI) 115, a user-to-user indication (UUI) 111, and a CPS header CRC (header error control: HEC) 116 of the AAL type 2. In Step S5 of the processing 1, the parameter such as the channel identifier 114 or the length indicator 115 is checked by the CPS processing unit. However, the CPS header CRC 116 of the AAL type 2 is not judged in this event.

Next, in Step S6 of the processing 2, a CRC of an IuUP header 110 shown in Fig. 7 is judged by the IuUP processing unit. A format of the IuUP header 110 includes a protocol data unit type (a PDU type) 117, a frame number 118, an IuUP mode version 119, a procedure indicator 120, an IuUP header CRC 121, and a payload CRC 122. In Step S6 of the IuUP processing, check for the IuUP header CRC 121 of the IuUP header 110 is executed. Next, check for the parameter such as the frame number 118 is executed in Step S7. Next, check for the payload CRC 122 of the IuUP header 110 is executed in Step S8. Finally, in the processing 3, the user data processing (the processing such as voice decoding) is executed by the user data processing unit.

In the voice user data processing, only UUI=26 is used in the CPS header 109. Accordingly, the IuUP header 110 is always included in a wireless network side ATM cell. Therefore, according to the present invention, the CPS header CRC 116 of the AAL type 2 in the CPS header 109 is not checked, because normality of the ATM cell can be confirmed by checking the IuUP header CRC 121 and the payload CRC 122 of the IuUP 110.

As described above, the present invention can avoid time delay attributable to check for the CPS header CRC 116 of the AAL type 2 in the CPS header 109, and thereby avoid voice delay equivalent to the time delay.

## Claims

1. A voice processing system for an asynchronous transfer mode (ATM) network, comprising:
a common part sublayer (CPS) processing unit for executing protocol conversion of voice data based on a CPS protocol without executing cyclic redundancy check (CRC); and
an Iu user plane (IuUP) processing unit for executing the protocol conversion and cyclic redundancy check (CRC) of the voice data based on an IuUP protocol being an upper protocol of the CPS protocol.

2. The voice processing system for an ATM network as claimed in claim 1,
wherein a CPS header of the voice data subjected to the protocol conversion based on the CPS protocol includes a channel identifier and a length indicator.

3. The voice processing system for an ATM network as claimed in claim 1 or 2,
wherein an IuUP header of the voice data subjected to the protocol conversion based on the IuUP protocol includes an IuUP header CRC and an IuUP payload CRC.

4. The voice processing system for an ATM network as claimed in claim 1, 2 or 3
wherein the protocol conversion based on the CPS protocol and the protocol conversion based on the IuUP are executed after the received user data is judged to be of the AAL type 2 CPS.

5. A voice processing method for an ATM network comprising the steps of:
executing check for a parameter of a CPS header;
executing check for CRC of an IuUP header;
executing check for a parameter of the IuUP header; and
executing check for IuUP payload CRC,
wherein check for CRC of the CPS header is withheld throughout the four steps.

6. The voice processing method for an ATM network as claimed in claim 5,
wherein parameters of the CPS header include a channel identifier and a length indicator.

7. The voice processing method for an ATM network as claimed in claim 5 or 6,
wherein an IuUP header of the voice data subjected to the protocol conversion based on the IuUP protocol includes an IuUP header CRC and an IuUP payload CRC.

8. The voice processing method for an ATM network as claimed in claim 5, 6 or 7,
wherein the protocol conversion based on the CPS protocol and the protocol conversion based on the IuUP are executed after the received user data is judged to be of the AAL type 2 CPS.
